# EUROPÄISCHE PATENTSCHRIFT

(11) **EP 0 906 595 B1**
(45) Veröffentlichungstag und Bekanntmachung des Hinweises auf die Patenterteilung: **07.11.2001**
(21) Anmeldenummer: 97930318.7
(22) Anmeldetag: 07.06.1997
(51) Int. Cl.: G05B 19/418, G05B 19/042

(54) **SCHALTUNG FÜR DIE KOMMUNIKATION EXTERNER GERÄTE MIT EINER ZENTRALEN/DEZENTRALEN DATENVERARBEITUNGSANLAGE ÜBER EINEN BUS**
CIRCUIT ENABLING EXTERNAL DEVICES TO COMMUNICATE WITH CENTRAL/DECENTRALISED DATA PROCESSING SYSTEM BY MEANS OF A BUS
CIRCUIT PERMETTANT A DES APPAREILS EXTERIEURS DE COMMUNIQUER AU MOYEN D'UN BUS AVEC UN SYSTEME CENTRALISE/DECENTRALISE DE TRAITEMENT DE DONNEES

(30) Priorität: 17.06.1996 DE 19624021; 08.11.1996 DE 19646219
(43) Veröffentlichungstag der Anmeldung: 07.04.1999
(73) Patentinhaber: ENDRESS + HAUSER CONDUCTA GESELLSCHAFT FÜR MESS UND REGELTECHNIK mbH & Co., 70839 Gerlingen (DE)
(72) Erfinder: GEORG, Erich, D-88662 Überlingen (DE); BABEL, Wolfgang, D-71263 Weil der Stadt (DE); GRÜNWALD, Wolfgang, D-71272 Malmsheim (DE); AMBOS, Stephan, D-71336 Waiblingen (DE)
(74) Vertreter: Otte, Peter, Dipl.-Ing.
(86) Internationale Anmeldenummer: DE9701207
(87) Internationale Veröffentlichungsnummer: WO9749017

(56) Entgegenhaltungen:
- EP-A- 0 301 736
- EP-A- 0 355 532
- EP-A- 0 540 903
- EP-A- 0 654 742
- EP-A- 0 666 631
- EP-A- 0 730 210
- DE-A- 4 434 553
- "NEUTRALE BUSLINIE" MESSEN UND PRUFEN, Bd. 32, Nr. 4, 1.April 1996, Seite 24 XP000591472

## Beschreibung

Die Erfindung betrifft eine Schaltung für die Kommunikation externer Feldgeräte mit einer Datenverarbeitungsanlage, insbesondere einer Überwachungs- und Regelungsanlage über einen Zweileiter-Feldbus, gemäß dem Oberbegriff des Anspruchs 1.

Solche Schaltungen werden beispielsweise in der Prozeßtechnik verwendet, um externe Geräte, beispielsweise "intelligente" Sensoren und Aktoren, an die zentrale oder dezentrale Überwachungs- und Regelungsanlage anschließen zu können.

Als Feldbussysteme sind beispielsweise in der Sensortechnik HART (Righway Addressable Remote Transmitter), der DIN-Meßbus, der PROFIBUS (PROCESS F'IELD BUS), FIP (Flux Information Processor oder auch Factory Instrumentation Protocol), der IEC-Feldbus und weitere gängig. Dabei geschieht die Übertragung der Daten durch die Feldbusse teilweise binär, zum Beispiel über genormte digitale Signale, teilweise auch analog. So wird beispielsweise die Datenübertragung durch den PROFIBUS binär vorgenommen, während bei HART der Meßwert analog mit einem überlagerten amplitudenmodulierten Kommunikationssignal an die Datenverarbeitungsanlage weitergegeben wird. In vielen Fällen ist auch eine Stromversorgung des externen Geräts über das Feldbussystem vorgesehen.

Aus der DE-Veröffentlichung "Neutrale Buslinie" Messen und Prüfen, Bd. 32, Nr. 4, 1. April 1996, Seite 24, gehen Busklemmen und Feldbuskoppler hervor, welche die Anpassung unterschiedlicher Feldbussysteme an einen internen Datenbus der Busklemmen ermöglichen.

Aus der EP-A-0 654 742 geht eine Schaltung für die Kommunikation von Peripheriegeräten mit einem Computersystembus hervor, bei der die Kommunikation über an sich bekannte in der Datenverarbeitungstechnik eingesetzte Bussysteme wie beispielsweise PCMCIA-EISA-PCI-VESA-Bussysteme stattfindet. Durch dieses Interface ist die Datenkommunikation über unterschiedliche, in der Datentechnik übliche Bussysteme möglich.

Aufgabe der Erfindung ist es, eine Schaltung für die Kommunikation externer Feldgeräte mit einer zentralen oder dezentralen Übertragungs- und Regelungsanlage über einen Zweileiter-Feldbus derart weiterzubilden, daß nicht nur eine automatische Erkennung der Feldbussysteme, sondern auch eine vollständige Anpassung auf diese Feldbussysteme, insbesondere auch dann, wenn die Stromversorgung der externen Feldgeräte über den Feldbus erfolgt, ermöglicht wird.

Diese Aufgabe wird bei einer Schaltung für die Kommunikation externer Feldgeräte mit einer zentralen/dezentralen Überwachungs- und Regelungsanlage über einen Zweileiter-Feldbus erfindungsgemäß durch die Merkmale des Anspruchs 1 gelöst.

Vorteilhafte Ausführungsbeispielse der Erfindung sind Gegenstand der Unteransprüche.

So sind beispielsweise zum Schutz der Schaltung Übertragerschaltkreise vorgesehen, die eine galvanische Entkopplung der Strom-/Spannungsversorgung des an die Schaltung angeschlossenen externen Geräts (Sensors, Aktors) zur Gewährleistung der Explosionssicherheit ermöglichen.

Ferner findet zur galvanischen Trennung des Stromkreises des externen Geräts (Sensorstromkreis) von dem Versorgungs-/Kommunikationsstromkreis der Schaltung, d.h. um die Schaltung eigensicher zu machen, die Datenübertragung von dem externen Gerät zu dem Mikrocontroller über eine digitale Schnittstelle, vorzugsweise über einen galvanisch entkoppelten I²C-Bus, statt.

Von Vorteil ist es auch, daß die Schaltung die Verwendung von Bussystemen ermöglicht, die sowohl auf einer digitalen als auch auf einer analogen Datenkommunikation basieren. Auch insoweit wird die beliebige Verwendbarkeit unterschiedlicher externer Geräte sichergestellt.

Die nachfolgende Beschreibung bevorzugter Ausführungsformen der Erfindung dient im Zusammenhang mit beiliegender Zeichnung der näheren Erläuterung. Es zeigen:
- Fig. 1: schematisch eine erfindungsgemäße Schaltung zur Kommunikation externer Geräte mit einer zentralen Datenverarbeitungsanlage über einen Bus;
- Fig. 2: den detaillierten Aufbau der in Fig. 1 dargestellten erfindungsgemäßen Schaltung und
- Fig. 3: schematisch das Schaltbild von externen Geräten, die an eine zentrale Datenverarbeitungsanlage auf an sich bekannte Weise über unterschiedliche Busse angekoppelt sind.

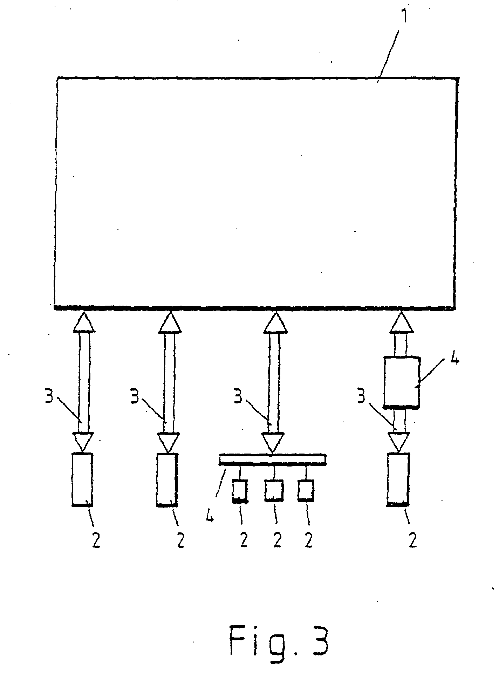

In Fig. 3 ist eine schematische Darstellung einer zentralen Datenverarbeitungsanlage 1 dargestellt, an die auf an sich bekannte Weise mehrere unterschiedliche externe Feldgeräte 2, beispielsweise Sensoren oder Aktoren, über unterschiedliche Feldbusse 3 angekoppelt sind.

Dabei können die Feldgeräte 2 direkt über den Feldbus 3 an die Datenverarbeitungsanlage 1 angeschlossen sein, es können aber auch mehrere Feldgeräte 2 zunächst über einen Feldverteiler 4, der beispielsweise ein Multiplexer sein kann, angeschlossen sein, wobei dieser Feldverteiler 4 seinerseits über einen Feldbus 3 mit der Datenverarbeitungsanlage 1 kommuniziert. Die Datenverarbeitungsanlage kann auch durch eine speicherprogrammierte Schaltung (SPS), ein Prozeßleitsystem (PLS), einen PersonalComputer (PC) oder ein sogenanntes Hand-Held-Terminal (HHT) realisiert sein.

Bei Verwendung mehrerer unterschiedlicher Feldgeräte 2, die jeweils ein anderes Feldbussystem 3 erfordern, müssen zu deren Anschluß an die Datenverarbeitungsanlage 1 unterschiedliche Typen von Feldbussen 3 vorgesehen sein. Wenn diese unterschiedlichen Typen, beispielsweise HART oder PROFIBUS u.dgl. nicht vorhanden sind, so ist es nicht möglich, zwischen externen Geräten, die diesen Bustyp erfordern, und der Datenverarbeitungsanlage 1 über die vorhandenen Busse 3 eine Datenverbindung vorzunehmen.

Der Grundgedanke der Erfindung besteht darin, eine Schaltung zu vermitteln, die unabhängig vom eingesetzten Feldbussystem die entsprechenden Busprotokolle erkennen und die erforderlichen Anpassungen vornehmen kann, so daß das Feldgerät 2 an jedes beliebige Feldbussystem 3 ohne externe Maßnahmen z.B. Betätigung von Schaltern o. dgl. ankoppelbar und somit unabhängig vom jeweils verwendeten Feldbussystem 3 verwendbar ist.

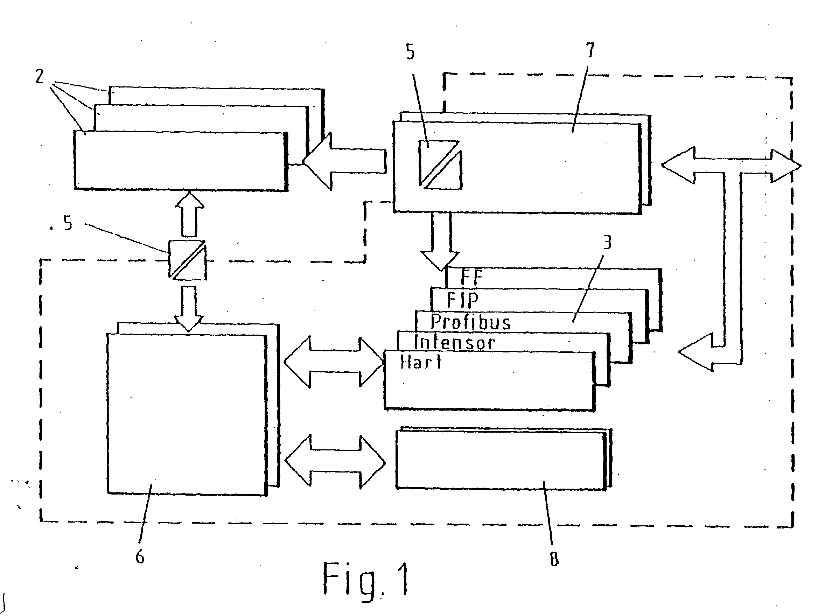

Wie aus Fig. 1 hervorgeht, in der eine Schaltung für die Kommunikation externer Geräte 2 mit einer zentralen Datenverarbeitungsanlage 1 über Bussysteme 3 schematisch dargestellt ist, umfaßt die Schaltung im wesentlichen eine Verarbeitungseinheit, beispielsweise einen Mikrocontroller 6, Strom-/Spannungsversorgungsschaltkreise 7 und eine Anzeige 8.

Die externen Feldgeräte 2 können beispielsweise pH-Sensoren, Leitfähigkeitssensoren u.dgl. sein, die sowohl in explosionsgefährdeter als auch in nicht explosionsgefährdeter Umgebung angeordnet sein können.

Zum Einsatz in explosionsgefährdeter Umgebung ist die gesamte Schaltung eigensicher ausgeführt. Hierzu ist es erforderlich, daß sowohl die Strom-/Spannungsversorgung der externen Geräte 2 durch die Strom-/Spannungsversorgungsschaltkreise 7 als auch der Datenaustausch der von den externen Geräten 2 erfaßten Daten mit dem Mikrocontroller 6 über Schaltkreise 5 stattfindet, die eine galvanische Entkopplung der externen Geräte 2 von dem Strom-/Spannungsversorgungsschaltkreis 7 bzw. dem Mikrocontroller 6 ermöglichen.

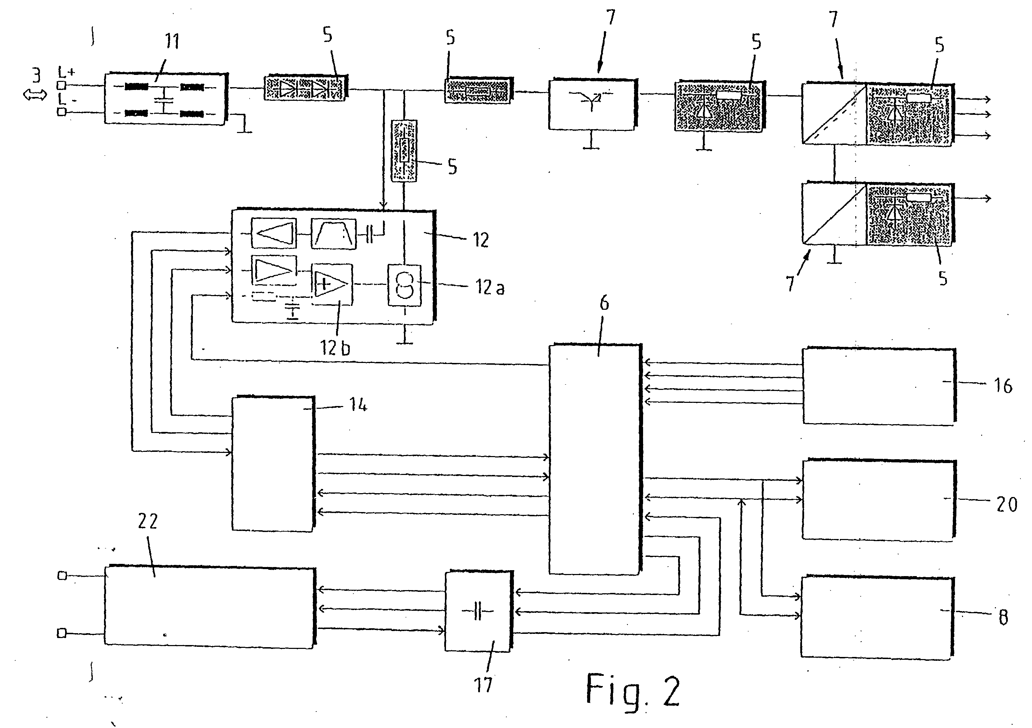

Die Schaltung für die Kommunikation externer Geräte 2 mittels einer zentralen Datenverarbeitungsanlage 1 über einen Bus 3 ist detaillierter in Fig. 2 dargestellt.

Wie aus Fig. 1 und Fig. 2 hervorgeht, sind Schaltkreise 5 zur Gewährleistung der Eigensicherheit der Schaltung vorgesehen.

Filter- und Überspannungsschutzschaltkreise 11 ermöglichen nicht nur eine Filterung der mittels beispielsweise einer an sich bekannten Zweileitertechnik eingespeisten Versorgungs- und Datensignale, sondern sie gewährleisten auch, daß keinerlei Störspannungen/-ströme aus der Schaltung heraus auf den Datenbus 3 gelangen können; sie ermöglichen somit den Einsatz der gesamten Schaltung in explosiver Umgebung.

Die Eingangssignale werden zunächst über die Schaltkreise 5 sowie die Filter- und Oberspannungsschutzschaltkreise 11 einer Anschalteinheit (MAU, engl. Medium Attachment Unit) 12 zugeführt. Diese Anschalteinheit 12 dient zur Filterung der Eingangs-/Ausgangssignale, im Falle von analogen Signalen zu deren Umwandlung in digitale Signale.

Von der Anschalteinheit 12 gelangen die Signale über ein Modem 14 zu dem Mikrocontroller 6, der beispielsweise mit einem externen Tastenfeld 16 sowie mit der Anzeige 8 oder auch mit einem EEPROM 20 über Anschlußleitungen verbunden ist. Der Mikrocontroller 6 ist - entkoppelt über eine digitale Schnittstelle 17, beispielsweise einen I²C-Bus 17 - mit einem Transmitter 22 verbunden, über den eine pH-, Temperatur-, Leitfähigkeits-Messung oder dgl. mittels eines (nicht dargestellten) Sensors erfolgt.

Die Anschalteinheit 12 umfaßt darüber hinaus eine ansteuerbare Stromquelle oder -senke 12a zur Anpassung an die Strom-/Spannungsverhältnisse des ansteuerbaren Geräts und zur internen Strom-/Spannungsversorgung der gesamten Schaltung.

Des weiteren ist in der Anschalteinheit 12 ein von dem Mikrocontroller 6 über das Modem 14 ansteuerbärer Summenverstärker 12b zur Ausgabe von auf das externe Gerät und den Bus angepaßten Kommunikationssignalen und zur Ansteuerung der Stromquelle/Stromsenke 12a vorgesehen.

Die Schaltung erkennt automatisch den an ihrem Eingang vorhandenen Bus und nimmt eine Anpassung des externen Feldgeräts auf diesen Bus 3 vor.

Es ist mittels der Schaltung beispielsweise möglich, eine digitale Übertragung der Daten, wie sie beispielsweise bei dem PROFIBUS vorliegt, genauso zu erkennen und zu verarbeiten, wie eine analoge Datenübertragung, wie sie beispielsweise bei dem bekannten HART-Bus üblich ist.

Dabei stellt sich die Schaltung, nachdem sie mittels der Anschalteinheit 12 des Modems 14 und des Mikrocontrollers 6 sowie der ansteuerbaren Strom-/Spannungsversorgungsschaltkreises erkannt hat, welcher Bus 3 am Eingang anliegt, selbständig auf die für die unterschiedlichen Bussysteme notwendigen Spannungen ein - beispielsweise auf einen Stromwert zwischen 4 und 20 mA, abhängig vom gemessenen Wert, im Falle der Verwendung des HART-Busses, oder auf die entsprechenden Strom- und Spannungswerte der digitalen Signalübertragung im Falle des PROFIBUS.

Abschließend ist zu erwähnen, daß die Anschalteinheit 12, das Modem 14 und der Mikrocontroller auch Teil eines einzigen integrierten Schaltkreises sein können.

## Patentansprüche

1. Schaltung für die Kommunikation externer
Feldgeräte mit einer zentralen/dezentralen Datenüberwachungsanlage (1), insbesondere einer Überwachungs- und Regelungsanlage über einen Zweileiter-Feldbus (3) für die Prozeßdatenerfassung, Steuerung und Regelung in der Sensor- und Aktortechnik, **dadurch gekennzeichnet, daß** die Schaltung zur Schaffung einer Anschlußmöglichkeit beliebiger externer Geräte über beliebige zwei Leitungen umfassende Feldbussysteme (3) an die Datenverarbeitungsanlage (1) Buserkennungs- und - Anpassungsschaltkreise (12, 14, 6, 7) zur automatischen Erkennung des für das externe Gerät erforderlichen Feldbussystems (3) und zur automatischen Anpassung auf dieses Feldbussystem (3) sowohl hinsichtlich des Datenaustausches als auch hinsichtlich der Strom/Spannunqsversorgung umfaßt:
- eine Verarbeitungseinheit zum Austausch und zur Verarbeitung der vom externen Gerät ausgegebenen Daten und zur Erkennung und Auswahl des verwendeten Feldbussystems (3) und des verwendeten Protokolls,
- eine Anschalteinheit (12) zur angepaßten Filterung und Verstärkung der vom Feldbus (3) empfangenen Eingangssignale und zu deren Umwandlung in digitale, dem Mikrocontroller (6) über ein Modem (14) zuführbare Signale und zur angepaßten Verstärkung der vom Mikrocontroller (6) über das Modem(14) ausgegebenen Signale an den Feldbus (3), welche
- eine ansteuerbare Stromquelle/Stromsenke (12a) zur, Anpassung an die Strom/Spannungsverhältnisse des externen Geräts und zur internen Stromversorgung der Schaltung,
- einen von dem Mikrocontroller (6) über das Modem (14) ansteuerbaren Summenverstärker (12b) in der Anschalteinheit (12) zur Ausgabe der auf das externe Gerät und den Feldbus (3) angepaßten Kommunikationssignale und zur Ansteuerung der Stromquelle/Senke (12a) aufweist.

2. Schaltung nach Anspruch 1, **dadurch gekennzeichnet, daß** ferner zum Schutz der Schaltung und um sie in explosiver Umgebung einsetzen zu können, Filter- und Überspannungsschutzschaltkreise (5) vorgesehen sind.

3. Schaltung nach einem der vorstehenden Ansprüche, **dadurch gekennzeichnet, daß** sie Schaltkreise (17) umfaßt, die eine vollständige galvanische Entkopplung des externen Geräts zur Gewährleistung der Explosionssicherheit ermöglichen.

4. Schaltung nach einem der vorstehenden Ansprüche, **dadurch gekennzeichnet, daß** sie eigensicher ist.

5. Schaltung nach einem der Ansprüche 1 bis 4, **dadurch gekennzeichnet, daß** durch Umwandlung analoger in digitale Signale in der Anschalteinheit (12) Feldbussysteme (3), die sowohl auf einer digitalen als auch auf einer analogen Datenkommunikation basieren, verwendbar sind.

## Claims

1. A circuit for communication between external field devices having a centralised/decentralised data monitoring system (1), in particular a monitoring and regulation system, by way of a two-conductor field bus (3) for process data detection, control and regulation in sensor and actuator technology, **characterised in that** the circuit for creating the possibility of connecting any external devices by way of field bus systems (3) including any two lines to the data processing system (1) [...] bus recognition and matching circuits (12, 14, 6, 7) for automatic recognition of the field bus system (3) required for the external device and for automatic matching to this field bus system (3) both with respect to the data exchange and with respect to the power/voltage supply includes:
- a processing unit for exchanging and processing the data output by the external device and for recognising and selecting the field bus system (3) used and the protocol used,
- a connection unit (12) for matched filtering and amplification of the input signals received by the field bus (3) and for converting them to digital signals which can be fed to the microcontroller (6) by way of a modem (14) and for matched amplification of the signals output from the microcontroller (6) by way of the modem (14) to the field bus (3), which has
- a controllable power source/current sink (12a) for matching to the current/voltage conditions of the external device and for internal power supply in the circuit,
- a summation amplifier, (12b) controllable by the microcontroller (6) by way of the modem (14), in the connection unit (12), for output of the communications signals matched to the external device and the field bus (3) and for controlling the power source/current sink (12a).

2. A circuit according to Claim 1, **characterised in that** furthermore, for the purpose of protecting the circuit and in order to be able to use it in an explosive environment, filtering and overvoltage protection circuits (5) are provided.

3. A circuit according to one of the preceding claims, **characterised in that** it includes circuits (17) which make it possible to completely DC-uncouple the external device in order to ensure protection against explosion.

4. A circuit according to one of the preceding claims, **characterised in that** it is intrinsically safe.

5. A circuit according to one of Claims 1 to 4, **characterised in that** by converting analog to digital signals in the connection unit (12) both those field bus systems (3) which are based on digital and those which are based on analog data communication can be used.

## Revendications

1. Circuit permettant à des appareils de terrain externes de communiquer avec une installation de surveillance de données (1), centralisée/décentralisée, notamment une installation de surveillance et de régulation, par un bus de terrain (3) à deux conducteurs, pour la saisie des données de procédé, la commande et la régulation en technique de capteurs et d'actionneurs,
**caractérisé en ce que**
le circuit destiné à créer une possibilité de branchement de n'importe quel appareil extérieur par un système de bus de terrain (3), quelconque, à deux conducteurs, sur une installation de traitement de données (1), comprend des circuits de reconnaissance de bus et/ou d'adaptation (12, 14, 6, 7) pour la reconnaissance automatique du système de bus de terrain (3) nécessaire à l'appareil externe et pour l'adaptation automatique à ce système de bus de terrain (3) à la fois pour l'échange des données et pour le courant/tension, c'est-à-dire :
- une unité de traitement pour l'échange de données émis par les appareils externes et pour reconnaître et sélectionner le système de bus de terrain (3), et le protocole utilisés,
- une unité de branchement (12) pour le filtrage adapté et l'amplification des signaux d'entrée de données, reçues par le bus de terrain (3) et pour leur conversion en des signaux numériques destinés au microcontrôleur (6) par l'intermédiaire d'un modem (14) et pour l'amplification adaptée des signaux émis par le microcontrôleur (6) par l'intermédiaire du modem (14) vers le bus de terrain (3), qui
- comporte une source de courant/puits de courant (12a) commandé pour l'adaptation aux conditions de courant/tension de l'appareil externe et pour l'alimentation en courant interne du circuit, et
- un amplificateur additionneur (12b) commandé à partir du microcontrôleur (6) par le modem (14) dans l'unité de branchement (12) pour émettre les signaux de communication adaptés à l'appareil externe et au bus de terrain (3) et pour commander la source de courant/puits de courant (12a).

2. Circuit selon la revendication 1,
**caractérisé en ce qu'**
il comporte en outre des circuits de filtre et de protection contre les surtensions (5) pour protéger le circuit et permette son utilisation dans un environnement explosif.

3. Circuit selon l'une des revendications précédentes,
**caractérisé en ce qu'**
il comprend des circuits de commutation (17) assurant un découplage galvanique total de l'appareil externe pour assurer la sécurité contre les explosions.

4. Circuit selon l'une quelconque des revendications précédentes,
**caractérisé en ce qu'**
il est en autosécurité.

5. Circuit selon l'une quelconque des revendications 1 à 4,
**caractérisé en ce que**
par conversion de signaux analogiques en signaux numériques, dans l'unité de branchement (12), on peut utiliser des systèmes de bus de terrain (3), reposant à la fois sur des communications numériques et analogiques de données.
